# EUROPÄISCHE PATENTSCHRIFT

(11) **EP 3 194 848 B1**
(45) Veröffentlichungstag und Bekanntmachung des Hinweises auf die Patenterteilung: **13.03.2019**
(21) Anmeldenummer: 15774988.8
(22) Anmeldetag: 14.09.2015
(51) Int. Cl.: F23C 5/28, F23C 99/00, F23N 1/02, F23C 5/02

(54) **VERFAHREN ZUM BETRIEB EINES MIT MINDESTENS EINEM ERSTEN BRENNER VERSEHENEN OFENS**
METHOD FOR OPERATING A FURNACE PROVIDED WITH AT LEAST ONE FIRST BURNER
PROCÉDÉ PERMETTANT DE FAIRE FONCTIONNER UN FOUR MUNI D'AU MOINS UN PREMIER BRÛLEUR

(30) Priorität: 19.09.2014 DE 102014113595
(43) Veröffentlichungstag der Anmeldung: 26.07.2017
(73) Patentinhaber: IBS Industrie-Brenner-Systeme GmbH, 58091 Hagen (DE)
(72) Erfinder: DR. GRAF VON SCHWEINITZ, Horst, 44805 Bochum (DE); WOLF, Thomas, 42283 Wuppertal (DE); DOMBROWSKI, Bert, 45527 Hattingen (DE)
(74) Vertreter: Hennicke, Ernst Rüdiger
(86) Internationale Anmeldenummer: PCT/IB2015/057041
(87) Internationale Veröffentlichungsnummer: WO 2016/042458

(56) Entgegenhaltungen:
- EP-A1- 2 431 696
- EP-A1- 2 527 734
- EP-A2- 2 778 521
- FR-A- 808 125
- US-A1- 2008 081 301

## Beschreibung

Die Erfindung betrifft ein Verfahren zum Betrieb eines mit mindestens einem ersten Brenner versehenen Ofens, insbesondere eines Industrieofens, wobei der Brenner Anschlüsse für Brennstoff und Luft aufweist und an einer Ofenwandung in den Ofen mündend angeschlossen ist.

Zum Beheizen eines Ofenraumes eines Industrieofens kommen Hochtemperaturbrenner zum Einsatz, mit denen Brennstoff wie Erdgas und Luft oder ein anderes Sauerstoffträgergas zur Reaktion gebracht werden, um mit den dabei entstehenden heißen Verbrennungsgasen den Ofenraum aufzuheizen. Solange die Verbrennung bei hohen Verbrennungstemperaturen unter Bildung einer Flamme erfolgt, kommt es vermehrt zur Bildung von Stickoxiden (NOₓ), was aus umwelttechnischen Gründen vermieden werden soll.

Für eine NOₓ-reduzierte Verbrennung zur Erzielung hoher Temperaturen im Ofeninnenraum sind in der Vergangenheit verschiedene Verfahren entwickelt worden, die darauf basieren, örtlich begrenzt auftretende Verbrennungstemperaturspitzen, wie sie in einer ausgeprägten Flamme eines Brenners zu finden sind, möglichst zu vermeiden. Zu diesem Zweck strebt man eine flammenlose Verbrennung der Reaktionspartner im Ofeninnenraum an, wodurch die Reaktionstemperatur vergleichsmäßigt wird und Temperaturspitzen, bei denen die höchsten Stickoxyd-Bildungsraten zu verzeichnen sind, nicht auftreten.

Damit eine flammenlose Verbrennung im Ofeninneren erfolgen kann, ist es erforderlich, den Ofenraum zunächst auf eine Betriebstemperatur vorzuheizen. Dies erfolgt mit Hilfe eines oder mehrerer Brenner, der/die an der Ofenwandung in dem Ofen mündend derart angeschlossen ist/sind, dass der dem Brenner zugeführte Brennstoff mit der ebenfalls zugeführten Verbrennungsluft unter Bildung einer in den Ofeninnenraum brennenden Flamme reagiert und hierdurch den Ofeninnenraum aufheizt. Bei Erreichen der für die flamenlose Verbrennung erforderlichen Temperatur im Ofen wird dann das Verbrennungsverfahren umgestellt.

Die EP 1 724 524 A2 schlägt hierzu vor, den Brennstoff und die Verbrennungsluft in einem Hochgeschwindigkeitsbrenner während der Aufheizphase zunächst in einer Verbrennungskammer unter aktiver Zündung zur Herausbildung einer flammenbehafteten Verbrennung reagieren zu lassen, bis die Atmosphäre im Ofeninnenraum eine Temperatur hat, die oberhalb der Selbstzündungstemperatur des gasförmigen Brennstoffes liegt. Die Zufuhr von Brennstoff zum Brenner wird dann solange unterbrochen, bis die Temperatur in der Brennkammer des Brenners unter die Selbstzündungstemperatur des Brennstoffes abgesunken ist. Die Zufuhr von gasförmigem Brennstoff zum Brenner wird dann wieder geöffnet, wobei der Brennstoff mit dem ebenfalls weiterhin über denselben Brenner zugeführten Sauerstoffträgergas erst reagiert, wenn die beiden Reaktionspartner in den Ofeninnenraum eintreten, in dem die für die Selbstentzündung und flammenlose Verbrennung erforderliche Selbstzündungstemperatur herrscht.

Das bekannte Verfahren und die zu dessen Durchführung vorgeschlagene Ofenanordnung haben den Nachteil, dass die Reaktion zwischen Brennstoff und Luft unmittelbar bei Eintritt der beiden Reaktionspartner in den Ofeninnenraum, also im Bereich der Einmündung der Austrittsdüse des Brenners in den Ofen beginnt. Es kann daher leicht dazu kommen, dass die Verbrennung zurück in die Brennkammer des Brenners schlägt und die dort herrschende Temperatur aufgrund des vergleichsweise geringen Volumens der Brennkammer in kurzer Zeit stark ansteigt und hierdurch wiederum die Bildung einer Flamme begünstigt.

In jedem Fall ist aufgrund der dann u.U. stark ansteigenden Temperatur in der Brennkammer eine verstärkte Bildung von Stickoxyden zu erwarten, die aber gerade vermieden werden sollen. Weitere Verfahren sind aus der EP2431696 und der EP2778521 bekannt.

Aufgabe der Erfindung ist es, ein Verfahren und eine Anordnung der eingangs genannten Art anzugeben, mit denen nach Erreichen der Betriebstemperatur (Selbstzündungstemperatur des eingesetzten Brennstoffes) zuverlässig vermieden wird, dass Brennstoff und Sauerstoffträgergas (Luft) bereits im Brenner selbst zur Reaktion miteinander gelangen und hierdurch hohe Verbrennungstemperaturen zur Folge haben.

Diese Aufgabe wird mit einem Verfahren gemäß Anspruch 1 gelöst.

Mit dem erfindungsgemäßen Verfahren und der erfindungsgemäßen Anordnung ist es möglich, den Ofen mittels des Brenners in der bekannten Weise zunächst auf Betriebstemperatur aufzuheizen, indem dem Brenner Brennstoff und Luft zugeführt, in der brennereigenen Misch- bzw. Brennkammer vermischt und gezündet und die dabei unter Flammenbildung entstehenden heißen Verbrennungsgase in das Ofeninnere geleitet werden. Sobald die Betriebstemperatur, also die Selbstentzündungstemperatur des Brennstoffes in der Ofenatmosphäre erreicht ist, wird dann erfindungsgemäß die Zufuhr eines der beiden Reaktionspartner, also Brennstoff oder Luft, zu dem Brenner entweder vollständig unterbrochen oder jedenfalls soweit reduziert, dass in der Brennkammer des Brenners selbst kein reaktionsfähiges Gemisch mehr gebildet wird. Auf diese Weise ist ausgeschlossen, dass in der Brennkammer des Brenners ein zündfähiges Gemisch vorhanden ist, so dass eine Verbrennung in dem im Vergleich zum Ofen kleinen Brennraum nicht stattfinden kann. Der zweite Reaktionspartner, der dem Brenner unverändert zugeführt wird, gelangt also zunächst unverbrannt durch den (ersten) Brenner in den Ofeninnenraum. Der erste Reaktionspartner wird vollständig oder jedenfalls zu einem erheblichen Anteil über die vom Brenner beabstandete Zufuhreinrichtung in den Ofeninnenraum geleitet und erst dort in Kontakt mit dem zweiten Reaktionspartner gebracht, so dass die flammenlose, exotherme Reaktion dann in einem in jedem Fall ausreichend großen Abstand von der Brennkammer des Brenners erfolgt, wobei wunschgemäß die Bildung von Stickoxyden aufgrund der vergleichsmäßigten Reaktionstemperatur auf ein Minimum beschränkt bleibt.

Erfindungsgemäß wird die Zufuhreinrichtung von mindestens einem zweiten Brenner gebildet und in der Aufheizphase werden beide Brenner mit Brennstoff und Luft beaufschlagt und die bei der Verbrennung mittels der Brenner entstehenden Verbrennungsgase werden in den Ofeninnenraum zu dessen Aufheizung geleitet, und nach Erreichen der vorgegebenen Betriebstemperatur wird der eine Brenner ausschließlich mit Brennstoff oder einem zündunfähigen Brennstoff-Luft-Gemisch mit Brennstoffüberschuss (λ << 1) und der andere Brenner ausschließlich mit Luft oder einem zündunfähigen Luft-Brennstoff-Gemisch mit Luftüberschuss (λ >> 1) beaufschlagt. Auf diese Art und Weise kann der Ofen mittels der mindestens zwei Brenner in nur sehr kurzer Zeit auf Betriebstemperatur aufgeheizt werden, woraufhin dann beide Brenner nicht länger als solche betrieben werden, sondern mittels des einen Brenners vorzugsweise lediglich der eine der beiden Reaktionspartner und mittels des anderen Brenners vorzugsweise ausschließlich der andere der beiden Reaktionspartner ins Ofeninnere geleitet werden. Besonders vorteilhaft ist es dabei, wenn die beiden Brenner oder mehrere erste Brenner und/oder mehrere zweite Brenner an gegenüberliegenden Wandungen des Ofens angeordnet sind, also einander mehr oder weniger gegenüber liegen, so dass die von dem oder den ersten Brenner(n) und dem oder den zweiten Brenner(n) in den Ofeninnenraum eingeleiteten Reaktionspartner im Wesentlichen erst im Zentrum des Ofeninnenraums in einer Weise miteinander vermischt sind, dass sie ein zündfähiges Gemisch bilden, die Verbrennung also jedenfalls im Abstand von der Ofenwandung ihren Ausgang nimmt.

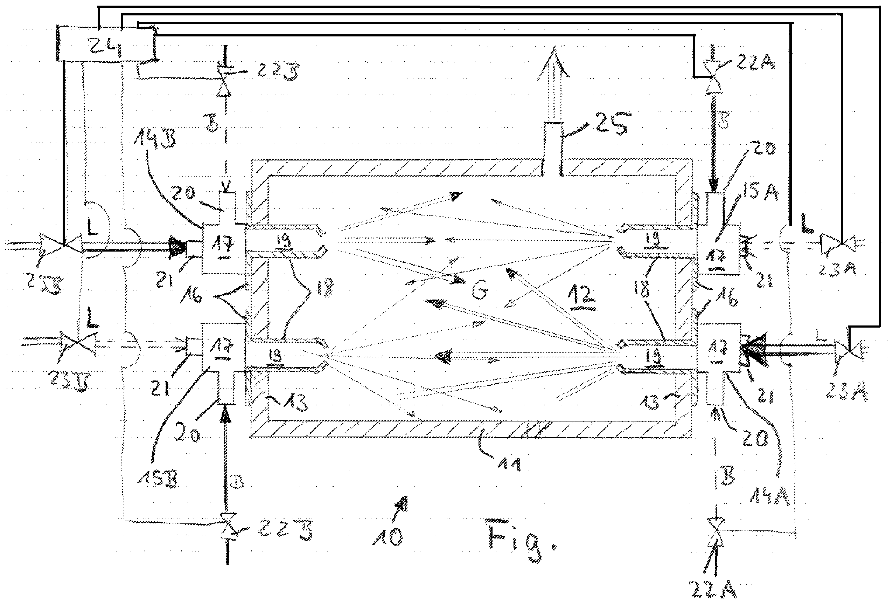

Weitere Merkmale und Vorteile der Erfindung ergeben sich aus der nachfolgenden Beschreibung und der Zeichnung, worin eine bevorzugte Ausführungsform der Erfindung anhand eines schematisch dargestellten Beispiels näher erläutert wird.

Die einzige **Figur** zeigt einen Hochtemperatur-Industrieofen mit insgesamt vier zu dessen Aufheizung vorgesehenen Gasbrennern schematisch vereinfacht im Schnitt.

Der in der Zeichnung in seiner Gesamtheit mit 10 bezeichnete Industrieofen umschließt mit seiner Ofenwandung 11 in bekannter Weise einen Ofeninnenraum 12, der durch die Verbrennung von Brennstoff mit Luft oder einem anderen geeigneten Oxidationsgas auf Betriebstemperatur aufgeheizt und gehalten wird. Hierzu ist der Ofen 10 an zwei einander gegenüberliegenden Seitenflächen 13 mit je einem ersten Brenner 14A, B und je einem zweiten Brenner 15A, B versehen, die an hierfür vorgesehenen Brenneraufnahmen 16 in den Brennertragwände bildenden Seitenflächen 13 angeflanscht sind.

Die ersten und zweiten Brenner 14, 15 sind identisch ausgestaltet. Es kann sich bei ihnen um herkömmliche Prozessbrenner für gasförmige oder flüssige Brennstoffe handeln, wie sie in Industrieöfen, Trocknern oder Nachverbrennungsanlagen in der thermischen Prozesstechnik zum Einsatz kommen. In dem nur schematisch dargestellten Ausführungsbeispiel haben die Brenner einen außerhalb des Ofens liegenden Brennerkopf 17 und ein ein Stück weit in den Ofeninnenraum 12 hineinragendes Flammrohr 18, das eine Brennkammer 19 für die Vermischung und Verbrennung von Brennstoff und Luft bildet. Die Brennkammern 19 der Brenner 14, 15 haben an ihrem vorderen, in den Ofeninnenraum 12 mündenden Ende eine Auslassdüse, durch die das Brenngas in den Ofeninnenraum 12 gelangt.

Sowohl die ersten Brenner 14A, B als auch die zweiten Brenner 15A, B haben jeweils einen ersten Anschluss 20 für die Zufuhr von Brennstoff B, beispielsweise von Erdgas, und einen zweiten Anschluss 21, über den dem jeweiligen Brenner Verbrennungsluft L zugeführt werden kann. Die mit Pfeilen angedeuteten Anschlussleitungen für das Brenngas B und die Verbrennungsluft L sind jeweils mit Absperrorganen 22A, B bzw. 23A, B versehen, die von einer nur schematisch als "Blackbox" dargestellten Steuerung 24 in der nachstehend beschriebenen Art und Weise zum Öffnen bzw. Schließen der Zufuhr von Brenngas und Luft zu den Brennern betätigt werden können.

Schließlich ist der Ofen 10 noch mit einem Abzug 25 für Abgas versehen, über den die Verbrennungsprodukte beispielsweise zu einem Schornstein od.dgl. abgeführt werden können.

Mit der beschriebenen Ofenanordnung wird der Ofeninnenraum wie folgt beschrieben auf Betriebstemperatur gebracht und gehalten:
Zum Anfahren des Ofens aus einem kalten Zustand auf Betriebstemperatur (wobei unter "kaltem Zustand" grundsätzlich jede Temperatur unterhalb der Betriebstemperatur zu verstehen ist) werden zunächst beide ersten Brenner 14A, B und beide zweiten Brenner 15A, B sowohl mit Luft L als auch mit Brenngas B in einem Verhältnis beaufschlagt, bei dem die in der Brennkammer 19 intensiv miteinander vermischten Reaktionspartner B, L ein zündfähiges Gemisch bilden, das noch in der Brennkammer gezündet wird, beispielsweise mittels eines in der Zeichnung nicht dargestellten Piezozünders, und unter Flammenbildung aus den vorderen Düsenöffnungen der Brenner in den Ofeninnenraum 12 gelangt. Durch den in den Ofeninnenraum reichenden Flammenaustritt erreicht man eine zügige Aufheizung des Ofens, wobei allerdings die dabei entstehenden Verbrennungsgase aufgrund der in den Flammen herrschenden, sehr hohen Temperaturen einen verhältnismäßig hohen Anteil an Stickoxiden enthalten, die aus Umweltgründen unerwünscht sind.

Bei Erreichen bzw. Überschreiten der vorgegebenen Betriebstemperatur im Ofeninnenraum, bei der es sich um eine Temperatur handelt, bei der der Brennstoff mit der Verbrennungsluft flammenlos miteinander reagieren, wird die Zufuhr von Brennstoff zu den ersten Brennern 14A, B und die Zufuhr von Luft zu den zweiten Brennern 15A, B unterbunden. Über die ersten Brenner 14A, B wird also nach Erreichen der Betriebstemperatur, die in den meisten Fällen oberhalb von 850° C liegt, nur noch Luft L in den Ofeninnenraum 12 eingeleitet, während der zum weiteren Beheizen des Ofens erforderliche Brennstoff nur noch über die zweiten Brenner 15A, B in den Ofeninnenraum gelangt. Es versteht sich, dass die Menge der Verbrennungsluft, die über die ersten Brenner 14 zugeführt wird, an die Menge des Brennstoffes, der über die zweiten Brenner 15 in den Ofen gelangt, angepasst ist, so dass für eine möglichst vollständige Verbrennung des Brennstoffes B auch die erforderliche Sauerstoffmenge zur Verfügung steht.

Man erkennt, dass sich das mit Einfach-Pfeil dargestellte Brenngas mit der als Doppelpfeil dargestellten Verbrennungsluft im zentralen, von der Ofenwandung 11 beabstandeten Bereich und damit im Abstand von den Flammrohren der Brenner in einer Weise miteinander vermischen, dass ein reaktionsfähiges Gemisch entsteht, das aufgrund der dort herrschenden, hohen Betriebstemperatur flammenlos verbrennt, wobei der Ausgangspunkt oder Herd dieser diffusen Verbrennung eher im Zentrum des Ofens als an dessen Wandung liegt. Nach dem Erreichen der für die flammenlose Verbrennung erforderlichen Betriebstemperatur arbeiten also alle vier Brenner nur noch als Zufuhreinrichtung jeweils für einen der beiden Reaktionspartner. Dabei bilden bei dem Ausführungsbeispiel die beiden ersten Brenner 14A, B Zufuhreinrichtungen für die Verbrennungsluft L und die beiden zweiten Brenner 15A, B jeweils Zufuhreinrichtungen für Brenngas. Die gute Vermischung der beiden Reaktionspartner Luft und Gas im Ofeninnenraum 12 wird begünstigt durch die besondere Anordnung der ersten und zweiten Brenner relativ zueinander, indem nämlich je ein erster Brenner neben dem einen der zweiten Brenner und gegenüber dem anderen der zweiten Brenner angeordnet ist, und umgekehrt.

Mit der erfindungsgemäßen Anordnung ist es verfahrensgemäß auch gut möglich, den Ort im Ofeninnenraum, an dem die Reaktion von Brennstoff und Verbrennungsluft schwerpunktmäßig erfolgt, durch Steuerung der den einzelnen ersten und zweiten Brennern zugeführten Mengen an Brennstoff und Verbrennungsluft zu beeinflussen. So ist es beispielsweise möglich, dem rechts in der Zeichnung angeordneten ersten Brenner 14A nicht nur Verbrennungsluft und dem rechts in der Zeichnung angeordneten zweiten Brenner 15A nicht ausschließlich Brennstoff zuzuführen, sondern diese beiden Brenner zusätzlich noch mit den jeweils zweiten Reaktionspartnern zu beaufschlagen, wobei dann jedoch die Menge an Brennstoff zu dem rechten ersten Brenner 14A und die Menge an Verbrennungsluft zu dem rechten zweiten Brenner 15A jeweils so gering bemessen bleiben, dass in den beiden Brennern 14A, 15A selbst noch kein reaktionsfähiges Gemisch gebildet wird, so dass keine Gefahr einer Verbrennung unter Bildung von Flammen aus dem Flammrohr 18 besteht. Auf die beschriebene Weise wird allerdings der Schwerpunkt der im Ofeninnenraum 12 erfolgenden flammenlosen Verbrennung gegenüber der vorstehend beschriebenen Betriebsweise, bei der alle Brenner lediglich mit einem der Reaktionspartner beaufschlagt werden, in der Zeichnung nach rechts verschoben werden, da das optimale Mischungsverhältnis für die flammenlose Reaktion zwischen den Reaktionspartnern in der Zeichnung rechts von der Mitte des Ofeninnenraums zu erwarten ist. Durch gezielte Öffnung der Absperrorgane 22A, B, 23A, B kann erfindungsgemäß also die Reaktionszone im Ofeninneraum beeinflusst werden.

Die Erfindung ist nicht auf das beschriebene und dargestellte Ausführungsbeispiel beschränkt. Insbesondere kann das erfindungsgemäße Verfahren auch mit mehr oder weniger Brennern durchgeführt werden, im Extremfall sogar mit lediglich einem Brenner, wenn noch mindestens eine zusätzliche Zufuhreinrichtung für lediglich einen der beiden Reaktionspartner im Abstand vom Brenner an einer Wandung des Ofens angeordnet ist, also beispielsweise eine einfache Luft- oder Brenngasdüse. Es können auch Brenner anderer Bauformen zum Einsatz kommen, beispielsweise Regenerativbrenner oder Rekuperatorbrenner, bei denen das anfallende Abgas zur Vorwärmung der Verbrennungsluft und des Brennstoffes genutzt wird.

## Patentansprüche

1. Verfahren zum Betrieb eines mit mindestens einem ersten Brenner versehenen Ofens, insbesondere eines Industrieofens, wobei der Brenner Anschlüsse (20, 21) für Brennstoff (B) und Luft (L) aufweist und an einer Ofenwandung (13) in den Ofen (10) mündend angeschlossen ist, **wobei**
- in einer Aufheizphase des Ofens (10) der Brenner (14) mit dem Brennstoff und Luft beaufschlagt und das derart gebildete zündfähige Gemisch im Brenner zur Reaktion gebracht und die entstehenden Verbrennungsgase in den Ofeninnenraum (12) zu dessen Aufheizung geleitet werden
- nach Erreichen einer vorgegebenen Betriebstemperatur im Ofeninneren die Zufuhr eines ersten der beiden Reaktionspartner (B oder L) zu dem Brenner (14) mindestens soweit reduziert wird, dass im Brenner kein reaktionsfähiges Gemisch gebildet wird, und dass der dem Brenner nicht länger zugeführte erste Reaktionspartner (B oder L) oder Teil des ersten Reaktionspartners über eine vom Brenner beabstandete Zufuhreinrichtung (15) dem Ofen zugeführt wird und im Ofeninneren mit dem weiterhin mittels des Brenner (14) in den Ofen geleiteten zweiten Reaktionspartner (L oder B) reagiert,
- **dadurch gekennzeichnet, dass** die Zufuhreinrichtung (15) von mindestens einem zweiten Brenner gebildet wird und dass in der Aufheizphase beide Brenner (14, 15) mit Brennstoff und Luft beaufschlagt werden und die bei der Verbrennung mittels der Brenner entstehenden Verbrennungsgase in den Ofeninnenraum (12) zu dessen Aufheizung geleitet werden, und dass nach Erreichen der vorgegebenen Betriebstemperatur der eine Brenner (15) ausschließlich mit Brennstoff oder einem zündunfähigen Brennstoff-Luft-Gemisch mit Brennstoffüberschuss (λ << 1) und der andere Brenner (14) ausschließlich mit Luft oder einem zündunfähigen Luft-Brennstoff-Gemisch mit Luftüberschuss (λ >> 1) beaufschlagt werden.

2. Verfahren nach Anspruch 1, **dadurch gekennzeichnet, dass** mehrere erste Brenner (14) und/oder mehrere zweite Brenner (15) vorgesehen und betrieben werden.

## Claims

1. Method for operating an oven, in particular an industrial oven, equipped with at least one first burner, wherein the burner has connections (20, 21) for fuel (B) and a (L) and is connected with an oven wall (13) opening out into the oven (10), **wherein**
- in a heating-up phase of the oven (10) the burner (14) is charged with the fuel and air and the combustible mixture formed in this manner is in the burner brought to a reaction and the resulting combustion gases are guided into the oven interior (12) for its heating-up
- after reaching a predetermined operating temperature in the oven interior the supply of a first one of the two reaction partners (B or L) to the burner (14) is reduced at least so far that in the burner no reactive mixture is formed, and that the first reaction partner (B or L) no longer supplied to the burner or part of the first reaction partner is supplied via a supply device (15), distanced from the burner, to the oven, and in the oven interior reacts with the second reaction partner (L or B) still guided into the oven by means of the burner (14),
- **characterised in that** the supply device (15) is formed by at least one second burner and that in the heating-up phase both burners (14, 15) are charged with fuel and air and the combustion gases resulting during the combustion by means of the burner are guided into the oven interior (12) for its heating-up, and that after reaching the predetermined operating temperature the one burner (15) is charged exclusively with fuel or a combustible fuel-air-mixture having fuel surplus (λ << 1) and the other burner (14) is charged exclusively with air or a combustible air-fuel-mixture having air surplus (λ >> 1).

2. Method according to claim 1, **characterised in that** several first burners (14) and/or several second burners (15) are provided and operated.

## Revendications

1. Procédé de fonctionnement d'un four muni d'au moins un premier brûleur, en particulier d'un four industriel, dans lequel le brûleur comporte des raccordements (20, 21) pour du combustible (B) et pour de l'air (L) et est raccordé de manière à déboucher dans le four (10) au niveau d'une paroi de four (13), **dans lequel**
- dans une phase de chauffage du four (10), le brûleur (14) est alimenté avec le combustible et avec l'air et le mélange inflammable ainsi formé est amené à réagir dans le brûleur et les gaz de combustion produits sont conduits dans l'espace intérieur de four (12) pour le chauffage de celui-ci,
- après qu'une température de fonctionnement prescrite a été atteinte dans l'intérieur de four, l'amenée d'un premier partenaire réactionnel parmi les deux partenaires réactionnels (B ou L) au brûleur (14) est réduite au moins jusqu'à ce qu'aucun mélange réactif ne se forme dans le brûleur et le premier partenaire réactionnel (B ou L) qui n'est plus amené au brûleur ou une partie du premier partenaire réactionnel est amenée au four par l'intermédiaire d'un dispositif d'amenée (15) distant du brûleur et réagit dans l'intérieur de four avec le deuxième partenaire réactionnel (L ou B) encore conduit dans le four au moyen du brûleur (14),
- **caractérisé en ce que** le dispositif d'amenée (15) est formé par au moins un deuxième brûleur et **en ce que**, dans la phase de chauffage, les deux brûleurs (14, 15) sont alimentés avec du combustible et avec de l'air et les gaz de combustion produits lors de la combustion au moyen des brûleurs sont conduits dans l'espace intérieur de four (12) pour le chauffage de celui-ci, et **en ce que**, après que la température de fonctionnement prescrite a été atteinte dans l'intérieur de four, un brûleur (15) est alimenté exclusivement avec du combustible ou avec un mélange combustible-air inflammable avec excédent de combustible (λ << 1) et un autre brûleur (14) est alimenté exclusivement avec de l'air ou avec un mélange air-combustible inflammable avec excédent d'air (λ >> 1).

2. Procédé selon la revendication 1, **caractérisé en ce qu'**on prévoit et fait fonctionner plusieurs premiers brûleurs (14) et/ou plusieurs deuxièmes brûleurs (15).
